## Europäisches Patentamt

## European Patent Office

## Office européen des brevets

(11) Veröffentlichungsnummer: **0 133 545**
**B1**

(12) **EUROPÄISCHE PATENTSCHRIFT**

(45) Veröffentlichungstag der Patentschrift:
**20.04.88**

(21) Anmeldenummer: **84109122.6**

(22) Anmeldetag: **01.08.84**

(51) Int. Cl.⁴: **C 02 F 3/10, C 02 F 3/06**

(54) **Verfahren und Vorrichtung zur biologischen Reinigung von Abwasser.**

(30) Priorität: **02.08.83 DE 3327774**

(43) Veröffentlichungstag der Anmeldung:
**27.02.85 Patentblatt 85/9**

(45) Bekanntmachung des Hinweises auf die Patenterteilung:
**20.04.88 Patentblatt 88/16**

(84) Benannte Vertragsstaaten:
**AT BE CH DE FR GB IT LI NL SE**

(56) Entgegenhaltungen:
**WO - A - 80/01484**
**CH - A - 476 645**
**DE - A - 2 420 744**
**DE - A - 2 420 977**
**GB - A - 1 546 423**
**US - A - 3 371 033**

**GWF-WASSER/ABWASSER, Band 124, Nr. 5, 1983,
Seiten 239-242, München, DE; M. HIROSE: "Ein neues
System einer Kombination des Belebungsverfahrens
mit sessilen Organismen auf Aufwuchsflächen"**

(73) Patentinhaber: **Linde Aktiengesellschaft,
Abraham-Lincoln-Strasse 21, D-6200 Wiesbaden (DE)**

(72) Erfinder: **Fuchs, Uwe, Helterwanger Strasse 46,
D-8000 München 70 (DE)**

(74) Vertreter: **Schaefer, Gerhard, Dr., Linde
Aktiengesellschaft Zentrale Patentabteilung,
D-8023 Höllriegelskreuth (DE)**

## Beschreibung

Die Erfindung betrifft eine Vorrichtung zur biologischen Reinigung von organische Verunreinigungen enthaltendem Abwasser mit einem ein Trägermaterial für Belebtschlamm aufweisenden Reaktor sowie mit einem dem Reaktor nachgeschalteten, einen Ablauf für gereinigtes Wasser und einen Schlammrücklauf zum Reaktor aufweisenden Nachklärbehälter, bei der im Reaktor als Trägermaterial kompakte Trägermaterialelemente aus einem offenzelligen Kunststoffschaum mittels Befestigungseinrichtungen angeordnet sind.

Aus der DE-AS 2 420 977 ist eine Vorrichtung zur Abwasserreinigung bekannt, bei der in einem Belüftungsbehälter Schaumstoffblöcke als Haftkörper für die Biomasse angeordnet sind. Den Schaumstoffblöcken ist dabei eine Zusammendrückvorrichtung zugeordnet, mit der die Schaumstoffkörper durch wechselweise Volumenvergrösserung und Volumenverkleinerung mit eingeleiteter Luft gefüllt und von dieser befreit werden. Die Schaumstoffblöcke sind so im Belüftungsbehälter angeordnet, dass sie allseits von dem zu behandelnden Abwasser umgeben sind. Eine direkte Durchströmung des Abwassers durch die Schaumstoffblöcke ist nicht vorgesehen.

Die bekannte Vorrichtung weist den Nachteil auf, dass sich im wesentlichen nur an der Oberfläche der Schaumstoffblöcke Mikroorganismen ansiedeln und zur Reinigung des Abwassers beitragen können, während im Innern der Schaumstoffblöcke die Versorgung der Mikroorganismen mit Nährstoffen unzureichend ist, da das Abwasser die Blöcke nicht durchströmen kann.

In gwf-Wasser/Abwasser 124, Seiten 239-242, ist ein Verfahren beschrieben, bei dem in einem Belebtschlamm-Reaktor als Ansiedlungsfläche für Mikroorganismen netzartig ausgebildete und in einem bestimmten Abstand zueinander angeordnete Kunststoffscheiben verwendet werden. Diese Kunststoffscheiben sind alle in Strömungsrichtung des Abwassers angeordnet und können vom Abwasser nicht durchströmt werden. Die Mikroorganismen können sich nur an der Oberfläche der Kunststoffscheiben ansiedeln.

Der Erfindung liegt die Aufgabe zugrunde, eine Vorrichtung sowie ein Verfahren der eingangs genannten Art so auszugestalten, dass damit auf einfache und kostengünstige Weise hohe Reinigungswerte erzielt werden können.

Diese Aufgabe wird erfindungsgemäss dadurch gelöst, dass die Trägermaterialelemente als Bahnen und/oder Platten aus für eine Durchströmung des Abwassers geeigneten Weich- oder Hartschäumen gefertigt und im wesentlichen senkrecht zur Strömungsrichtung des Abwassers angeordnet sind.

Die erfindungsgemässe Vorrichtung weist gegenüber herkömmlichen Vorrichtungen zur Abwasserreinigung unter Verwendung von Trägermaterialelementen den Vorteil auf, dass aufgrund der Durchströmung des Trägermaterials mit Abwasser auch im Innern des Trägermaterials eine gute Versorgung der Mikroorganismen mit Nährstoffen gewährleistet ist. Dadurch können sich auch im Innern des Trägermaterials Mikroorganismen in grosser Zahl ansiedeln und zur Abwasserreinigung beitragen, wodurch die Reinigungsleistung gegenüber herkömmlichen Vorrichtungen erheblich gesteigert wird.

Da ausser der Ausstattung des Reaktors mit den erfindungsgemässen Trägermaterialelementen keine weiteren Massnahmen erforderlich sind, wird durch die erfindungsgemässe Vorrichtung eine Steigerung der Reinigungsleistung auf einfache und kostengünstige Weise erreicht.

Die Trägermaterialelemente sind als Bahnen und/oder Platten ausgebildet, die eine Dicke von 1 bis 100 cm, vorzugsweise 10 bis 30 cm aufweisen. Ausserdem können zwischen den Trägermaterialelementen vorhandene Zwischenräume zumindest teilweise mit porösen freibeweglichen Trägerteilen gefüllt sein, wodurch die Abbauleistung der Verunreinigungen noch weiter gesteigert werden kann.

Zweckmässigerweise sind die Trägermaterialelemente aus offenzelligen oder retikulierten Weich- oder Hartschaumstoffen gebildet. Die Mikroorganismen können sich dann auch im Innern des Trägermaterials in den Poren ansiedeln und werden zu einem dezentralisierten Wachstum gezwungen. Insbesondere kommen dabei Schaumstoffe auf der Basis von Polyurethan, Polyäthylen, Polypropylen, Polyvinylchlorid, Silicon oder Harnstoff-Formaldehydharz zur Anwendung. In besonderen Fällen sind auch geschlossenzellige Styropor- oder Polyäthylen- oder Polypropylen-Elemente, die perforiert wurden, d.h. zumindestens teilweise offenporig gemacht wurden, geeignet.

Es hat sich als günstig erwiesen, wenn bei der erfindungsgemässen Vorrichtung die Trägermaterialelemente 10 bis 100 Vol.%, vorzugsweise 20 bis 50 Vol.%, des Reaktorinhalts ausfüllen.

Nach einer weiteren Variante der erfindungsgemässen Vorrichtung weisen die Trägermaterialelemente Perforierungen auf. Diese können insbesondere gestanzt, gebohrt oder gebrannt sein und auf zwei verschiedene Arten angeordnet sein. Horizontal angeordnete Perforierungen mit einem Durchmesser von 0,5 bis 10 cm, bevorzugt 2 bis 4 cm, sorgen durch ihre Anordnung in Richtung der Strömungsrichtung für eine gleichmässige Strömung. Vertikal angeordnete Perforierungen mit einem Durchmesser von 0,5 bis 30 cm, bevorzugt 8 bis 16 cm, dienen zur besseren Sauerstoffversorgung im Innern des Trägermaterialelementes.

Die Erfindung bezieht sich überdies auf ein Verfahren zur biologischen Reinigung von organische Verunreinigungen enthaltendem Abwasser, bei dem das Abwasser in einem Reaktor in Gegenwart von darin angeordneten Trägermaterialelementen für Belebtschlamm mit Luft und/oder reinem Sauerstoff begast und anschliessend das Abwasser-Belebtschlamm-Gemisch in einer Nachklärung zu gereinigtem Wasser und Schlamm aufgeteilt wird und zumindest ein Teil des abgeschiedenen Schlamms in den Reaktor zurückgeführt wird. Dieses Verfahren ist dadurch gekennzeichnet, dass das Abwasser durch die senkrecht zur Strömungsrichtung des Abwassers angeordneten Trägermaterialelemente hindurchgeführt wird.

Ohne Einschränkung können die als Bahnen und/oder Platten aus für eine Durchströmung von Abwasser geeigneten Weich- oder Hartschäumen gefertigten Trägermaterialelemente in der erfindungsgemässen Vorrichtung bei der äroben und/oder bei der anäroben Reinigung von Abwasser verwendet werden. Die Nachrüstung bereits bestehender Abwasserreinigungsanlagen mit den erfindungsgemäss vorgeschlagenen Trägermaterialelementen lässt sich dabei problemlos durchführen. Der Einsatz der kompakten Trägermaterialelemente bei der anoxischen Abwasserreinigung ist ebenfalls möglich.

Im folgenden sei das erfindungsgemässe Verfahren anhand eines schematisch dargestellten Ausführungsbeispiels näher erläutert.

Es zeigen:

Fig. 1a und 1b verschiedene Formen der Trägermaterialelemente

Fig. 2a–2c verschiedene Befestigungskonstruktionen der Trägermaterialelemente

Fig. 3a und 3b Trägermaterialelemente mit Bohrungen und

Fig. 4a und 4b Regeneriereinrichtungen für Trägermaterialelemente.

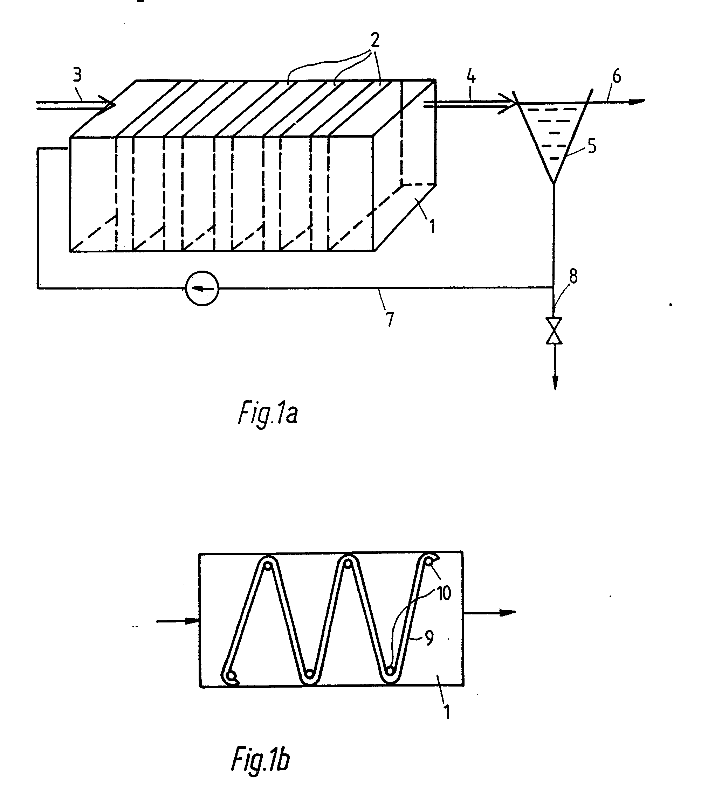

In der Figur 1a ist mit 1 ein gegen die Atmosphäre offener und als Belebungsbecken ausgebildeter Reaktor bezeichnet. In dem Belebungsbecken 1 sind quer zur Strömungsrichtung des Abwassers Trägermaterialplatten 2 für die Mikroorganismen befestigt. Die Trägermaterialplatten sind offenzellig mit Makroporen von 0,1 bis 3 mm Durchmesser aus beispielsweise Polyurethanschaum ausgebildet. Die Dicke der Platten beträgt dabei z.B. 20 cm.

Das zu behandelnde Abwasser wird über einen Zulauf 3 in das Belebungsbecken 1 eingeleitet, während das behandelte Abwasser über einen im oberen Bereich des Belebungsbeckens 1 angeschlossenen Ablauf 4 abgezogen und einer als Absatzbecken ausgebildeten Nachklärung 5 zugeführt wird. Über einen Ablauf 6 wird gereinigtes Wasser und über einen Schlammrücklauf 7 mit Pumpe Schlamm zur Rückleitung in das Belebungsbecken 1 abgezogen. An den Schlammrücklauf 7 ist überdies eine Schlammableitung 8 für den Überschussschlamm angeschlossen.

Die Sauerstoffversorgung der Mikroorganismen erfolgt im dargestellten Ausführungsbeispiel durch Luftzufuhr. Es ist aber auch denkbar, dass das Belebungsbecken 1 geschlossen ausgebildet ist, um die Mikroorganismen mit einem mit Sauerstoff angereicherten Gas zu versorgen. Dieses Gas kann dann in bekannter Weise durch Oberflächenbelüfter oder über eine am Boden des Belebungsbeckens befindliche Gaszufuhrleitung eingetragen werden.

Figur 1b zeigt das Belebungsbecken 1 in Draufsicht. Zu behandelndes Abwasser durchfliesst in Pfeilrichtung das Belebungsbecken 1, das mit einer schleifenförmig angeordneten Trägermaterialbahn 9 ausgestattet ist. Die Trägermaterialbahn 9 wird durch Haltestäbe 10 im Belebungsbecken fixiert. Es kann sich dabei um eine einzige Bahn oder um mehrere Trägermaterialbahnen handeln.

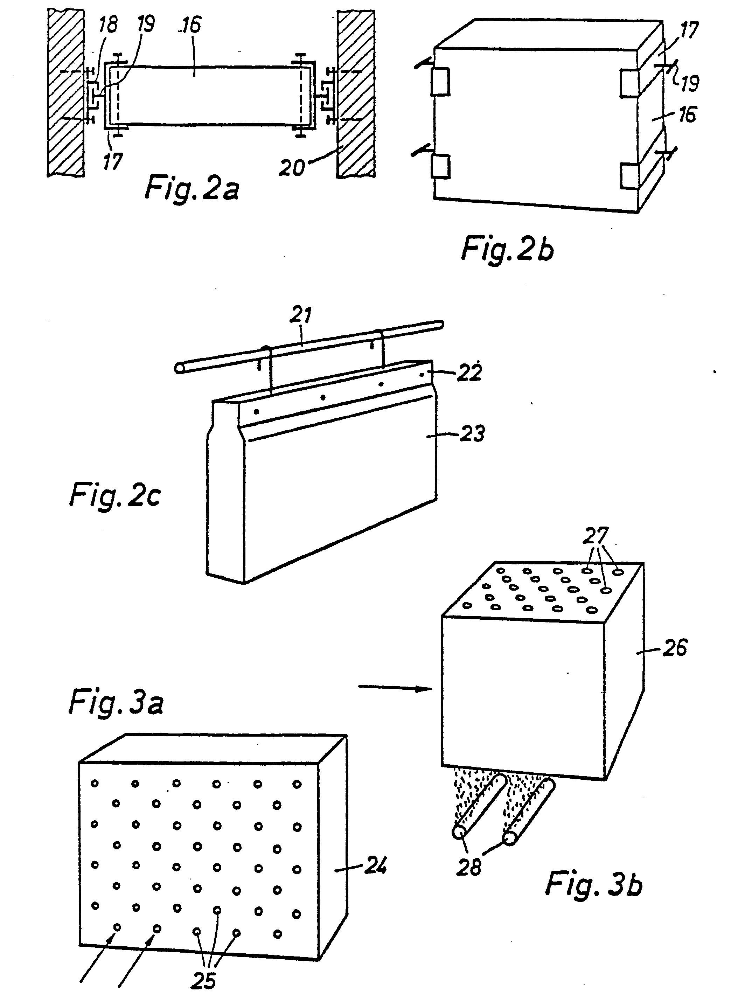

In Figur 2a ist in der Draufsicht eine herausnehmbare Trägermaterialplatte 16 dargestellt, die über eine Befestigungskonstruktion 17 mit Schiene 18 und Läufer 19 an der Beckenwand 20 befestigt ist. In der Seitenansicht (Figur 2b) wird deutlich, dass die Befestigungskonstruktion 17 mit dem Läufer 19 fest auf die Trägermaterialplatte 16 montiert ist. Dadurch ist es möglich, die Trägermaterialplatte jederzeit aus dem Belebungsbecken herauszunehmen und wieder einzusetzen, ohne dass das Belebungsbecken entleert werden muss.

In Figur 2c ist eine Hängevorrichtung bestehend aus einer Haltestange 21, die bevorzugt auf den Beckenrand aufliegt, und einer Befestigungsleiste 22 für die Trägermaterialplatte 23 dargestellt.

Figur 3a und 3b zeigen einzelne Trägermaterialelemente, die mit Bohrungen versehen sind. Gemäss Figur 3a ist ein Trägermaterialelement 24 mit Bohrungen 25 dargestellt, die in Strömungsrichtung (Pfeilrichtung) angeordnet sind und für eine gleichmässige Strömung sorgen.

Figur 3b zeigt dagegen ein Trägermaterialelement 26 mit Bohrungen 27, die senkrecht zur durch den Pfeil angedeuteten Strömungsrichtung angeordnet sind und über eine nur schematisch dargestellte Begasungseinrichtung 28 für eine ausreichende Sauerstoffversorgung auch im Innern des Trägermaterialelements 26 sorgen.

In Figur 4a ist eine im Belebungsbecken 1 montierte Regeneriereinrichtung für die Trägermaterialelemente dargestellt. Auf einer am Beckenrand montierten Laufschiene 29 ist ein beweglicher Wagen 30 befestigt, der über einen Schwenkarm 31 und einen Motor 32 zwei Presswalzen 33a, 33b derart bewegen kann, dass sie auf die zu regenerierende Trägermaterialplatte 2 gehoben und darüber geführt werden, wobei der ausgepresste Schlamm freigesetzt und in der Nachklärung vom gereinigten Wasser abgetrennt wird. Vorteilhaft haben dabei die Presswalzen gleiche Länge wie die Trägermaterialplatten.

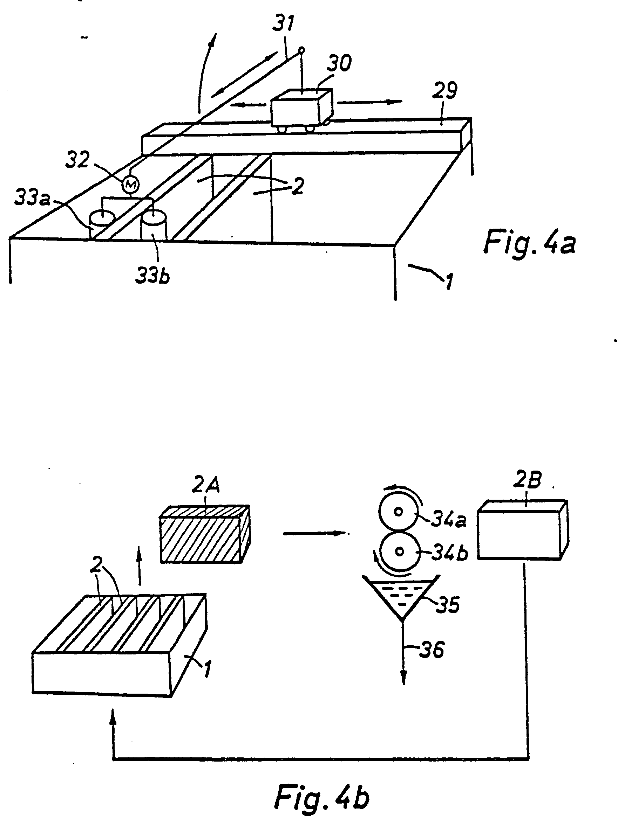

In Figur 4b ist schematisch die Verfahrensführung bei externer Regenerierung dargestellt. Aus dem Belebungsbecken 2 wird das beladene Trägermaterialelement 2A entnommen und einer Presseinrichtung bestehend aus zwei Presswalzen 34a, 34b zugeführt. Der ausgepresste Schlamm wird in einem Behälter 35 aufgefangen und zur weiteren Verwendung abgezogen (Pfeil 36). Das regenerierte Trägermaterialelement 2B wird sodann in das Belebungsbecken 1 zurückgeführt.

## Patentansprüche

1. Vorrichtung zur biologischen Reinigung von organische Verunreinigungen enthaltendem Abwasser mit einem ein Trägermaterial für Belebtschlamm aufweisenden Reaktor sowie mit einer dem Reaktor nachgeschalteten, einen Ablauf für gereinigtes Wasser und einen Schlammrücklauf zum Reaktor aufweisenden Nachkläreinheit, bei der im Reaktor als Trägermaterial Trägermaterialelemente aus einem offenzelligen Kunststoffschaum mittels Befestigungseinrichtungen angeordnet sind, dadurch gekennzeichnet, dass die Trägermaterialelemente als Bahnen und/oder Platten aus für eine Durchströmung des Abwassers geeigneten Weich- oder Hartschäumen gefertigt und im wesentlichen senkrecht zur Strömungsrichtung des Abwassers angeordnet sind.

2. Vorrichtung nach Anspruch 1, dadurch gekennzeichnet, dass die Trägermaterialelemente Perforierungen aufweisen.

3. Vorrichtung nach einem der Ansprüche 1 bis 3, dadurch gekennzeichnet, dass zwischen den Trägermaterialelementen vorhandene Zwischenräume zumindest teilweise mit porösen, frei beweglichen Trägerteilen gefüllt sind.

4. Verfahren zur biologischen Reinigung von organische Verunreinigungen enthaltendem Abwasser, bei dem das Abwasser in einem Reaktor in Gegenwart von darin angeordneten Trägermaterialelementen für Belebtschlamm aus einem offenzelligen Kunststoffschaum mit Luft und/oder reinem Sauerstoff begast, anschliessend das Abwasserbelebtschlamm-Gemisch in einer Nachklärung zu gereinigtem Wasser und Schlamm aufgeteilt wird, und zumindest ein Teil des abgeschiedenen Schlamms in den Reaktor zurückgeführt wird, dadurch gekennzeichnet, dass das Abwasser durch die senkrecht zur Strömungsrichtung des Abwassers angeordneten Trägermaterialelemente hindurchgeführt wird.

5. Verwendung von als Bahnen und/oder Platten aus für eine Durchströmung von Abwasser geeigneten Weich- oder Hartschäumen gefertigten Trägermaterialelementen in einer Vorrichtung nach Patentanspruch 1 bei der äroben und/oder anäroben sowie bei der anoxischen Reinigung von Abwasser.

## Claims

1. Apparatus for the biological purification of waste water containing organic impurities, having a reactor which has a carrier material for activated sludge, and a secondary settling tank which is downstream of the reactor and has an outlet for purified water and a sludge return to the reactor, in which apparatus compact carrier material elements made of an open-cell synthetic resin foam are arranged as carrier material in the reactor by means of anchoring devices, characterised in that the carrier material elements are manufactured as webs and/or plates made of soft or hard foams suitable for the waste water to flow through, and are arranged essentially at right angles to the direction of flow of the waste water.

2. Apparatus according to Claim 1, characterised in that the carrier material elements have perforations.

3. Apparatus according to one of Claims 1 to 3 (sic), characterised in that interstices present between the carrier material elements are at least partially filled with porous, freely moving carrier particles.

4. Process for the biological purification of waste water containing organic impurities, in which air and/or pure oxygen is passed through the waste water in a reactor in the presence of carrier material elements for activated sludge which are arranged therein, and subsequently the waste water/activated sludge mixture is divided, in a secondary settling tank, into purified water and sludge, and at least a part of the sludge whiche has settled out is returned to the reactor, characterised in that the waste water is passed through the carrier material elements which are arranged at right angles to the direction of flow of the waste water.

5. Use of carrier material elements manufactured as webs and/or plates from soft or hard foams suitable for waste water to flow through in an apparatus according to Patent Claim 1 for the aerobic and/or anaerobic and for the anoxic purification of waste water.

## Revendications

1. Dispositif de purification biologique d'eaux usées contenant des impuretés organiques, comportant un réacteur pourvu d'un matériau support de boue activée ainsi qu'une unité de postclarification disposée en aval du réacteur et pourvue d'une évacuation de l'eau purifiée et d'une conduite de recyclage de la boue vers le réacteur, dispositif dans lequel, des éléments de matériau support en mousse de matière plastique à pores ouverts sont fixés dans le réacteur par des éléments de fixation, caractérisé en ce que les éléments de matériau support sont fabriqués sous la forme de bandes et/ou de plaques en mousse de matière plastique dure ou souple convenant à une traversée des eaux usées et sont disposés de façon sensiblement perpendiculaire à la direction d'écoulement des eaux usées.

2. Dispositif selon la revendication 1, caractérisé en ce que les éléments de matériau support comportent des perforations.

3. Dispositif selon l'une quelconque des revendications 1 et 2, caractérisé en ce que les espaces intercalaires entre les éléments de matériau support sont remplis, tout au moins partiellement, de particules porteuses poreuses se déplaçant librement.

4. Procédé de purification biologique d'eaux usées contenant des impuretés organiques dans lequel, les eaux usées sont, dans un réacteur, traversées par de l'air et/ou un gaz contenant de l'oxygène en présence d'éléments de matériau support de boue activée formé de mousse de matière plastique à pores ouverts et se trouvant dans le réacteur, ensuite le mélange eaux usées-boue activée est séparé dans une installation de post-clarification en eau purifiée et en boue, puis au moins une partie de la boue séparée est recyclée dans le réacteur, caractérisé en ce que l'on fait passer les eaux usées à travers des éléments de matériau support disposés perpendiculairement à la direction d'écoulement des eaux usées.

5. Utilisation d'éléments de matériau support fabriqués sous la forme de bandes et/ou de plaques en mousse de matière plastique dure ou souple convenant à une traversée par des eaux usées dans un dispositif selon la revendication 1, pour la purification aérobie et/ou la purification anaérobie ainsi que pour la purification anoxique des eaux usées.

*Fig.1a*

*Fig.1b*

0 133 545

Fig. 2a

Fig. 2b

Fig. 2c

Fig. 3a

Fig. 3b

9

Fig. 4a

Fig. 4b